# EUROPÄISCHE PATENTSCHRIFT

(11) **EP 0 814 011 B1**
(45) Veröffentlichungstag und Bekanntmachung des Hinweises auf die Patenterteilung: **05.09.2001**
(21) Anmeldenummer: 97109095.6
(22) Anmeldetag: 05.06.1997
(51) Int. Cl.: B62D 1/19

(54) **Lenkanlage**
Steering system
Système de direction

(30) Priorität: 18.06.1996 DE 19624218
(43) Veröffentlichungstag der Anmeldung: 29.12.1997
(73) Patentinhaber: ADAM OPEL AG, 65423 Rüsselsheim (DE)
(72) Erfinder: Pfannebecker, Günter, 65428 Rüsselsheim (DE)

(56) Entgegenhaltungen:
- DE-A- 4 339 429
- US-A- 5 390 955
- "INTEGRAL, CAST-IN-PLACR SHEAR CAPSULE DESIGN" RESEARCH DISCLOSURE, Nr. 372, 1.April 1995, EMSWORTH, GB, Seite 261 XP000509069
- PATENT ABSTRACTS OF JAPAN vol. 096, no. 011, 29.November 1996 -& JP 08 183463 A (TOYOTA MOTOR CORP;KOYO SEIKO CO LTD), 16.Juli 1996,

## Beschreibung

Die Erfindung betrifft eine Lenkanlage mit einer zu einem Lenkgetriebe führenden, ein Lenkrad tragenden Lenksäule, welche in einem Lenkschutzrohr drehbar und axial fixiert gelagert ist und bei der das Lenkschutzrohr mittels eines fest mit ihm verbundenen Lenkungshalters an einem Lenkungsträger beim Auftreten durch einen Crash bedingter hoher Kräfte relativ zum Lenkungsträger lösbar durch ein Einsatzteil gehalten ist, wobei das Einsatzteil zumindest einen in den Lenkungshalter eingreifenden Abreißkörper hat, welcher zum Abreißen bei einer definierten durch den Fahrer auf das Lenkrad ausgeübten Kraft und damit zum völligen Freigeben des Lenkungshalters ausgebildet ist.

Bei der Lenkanlage gemäß der EP-B-0 295 378 ist das Einsatzteil als energieabsorbierende Platte ausgebildet. Diese soll zur Erzielung eines definierten Deformationsverhaltens aus verschiedenen Materialien bestehen und bei einem Unfall aufreißen. Durch die Verformung des Einsatzteiles soll erreicht werden, daß bei einem Crash durch den Stoß des Fahrers gegen das Lenkrad dieses zum Motorraum hin nachgeben kann, so daß keine für den Fahrer unzulässig hohen Verzögerungen auftreten.

Eine vergleichbare Lenkanlage ist in der DE-A-43 39 429 beschrieben. Bei dieser Lenkanlage soll die Aufprallenergie dadurch absorbiert werden, daß ein U-förmiges Befestigungsteil plastisch verformt bzw. abgeschert wird.

Bei extremen Aufprallkräften soll der Lenkungshalter sogar vom Lenkungsträger freikommen.

Bei schweren Unfällen hat sich gezeigt, daß die mögliche Energieabsorption im Bereich des Lenkungshalters nicht ausreicht, um bei einem Kopf- oder Brustaufschlag des Fahrers eine ausreichende Nachgiebigkeit zu erreichen. Das gilt insbesondere dann, wenn die Stoßkraft nicht genau in Richtung der Lenksäule wirkt, weil der Fahrer schräg auf das Lenkrad trifft.

Aus der US-PS 5 390 955 ist eine gattungsgemäße Lenkanlage bekannt, bei der der Lenkungshalter an zwei Stellen zwischen jeweils zwei Plastikscheiben eingeklemmt und reibschlüssig gehalten ist. Die Scheiben werden von einer Schraube zentral zusammengehalten und mit einem Lenkungsträger verbunden. Die einander zugewandten Flächen der Scheiben, zwischen denen der Lenkungshalter eingeklemmt ist, sind angeschrägt, so daß bei einem leichten Versatz des Halters der Reibschluß gelöst wird. Die Scheiben werden außerdem von Haken zusammengehalten, die bei einem derartigen Versatz abgeschert werden. Sie sind mit einem Spiel durch eine Öffnung im Lenkungshalter geführt und bestimmen damit in zweiter Linie, bei welcher Kraft die Verbindung gelöst wird.

Der Erfindung liegt deshalb das Problem zugrunde, eine Lenkanlage der eingangs genannten Art so zu gestalten, daß mit möglichst geringem Aufwand bei einer stoßartigen Krafteinwirkung auf das Lenkrad ein ausreichend starkes Nachgeben des Lenkrades eintritt.

Dieses Problem wird erfindungsgemäß dadurch gelöst, daß der Abreißkörper formschlüssig in den Lenkungshalter eingreift, und daß ein Lagerunterteil eine Auflagefläche für den Lenkungshalter und dazu höhenversetzt eine Auflage für das Einsatzteil hat, so daß zwischen dem Einsatzteil und der Auflagefläche ein Schlitz zur Aufnahme des Lenkungshalters verbleibt.

Mit dieser Lösung wird abweichend von dem zu erwartenden Lösungsweg bei bekannten Lenkanlagen die Verformbarkeit der Verbindung zwischen der Lenksäule und dem Lenkungsträger nicht erhöht um dort eine größere Energieabsorption zu erreichen, sondern genau entgegengesetzt diese Verbindung so schwach ausgebildet, daß es bei einem Crash dort zu einem definierten Abscheren kommt, so daß so gut wie keine Energie absorbiert wird. Dieser Gestaltung lag die Erkenntnis zugrunde, daß in Lenksäulen heutiger Kraftfahrzeuglenkungen ohnehin ein Absorber angeordnet ist, welcher bei einem Frontalaufprall verhindern soll, daß die Lenksäule durch Krafteinwirkung von außen in den Fahrgastraum gedrückt wird. Durch die erfindungsgemäße Gestaltung wird erreicht, daß dieser Absorber statt nur bei Krafteinwirkung von außen auch bei Krafteinwirkung von innen wirksam werden kann, indem sich bei einem Aufschlag des Fahrers auf das Lenkrad die Lenkanlage von dem Lenkungsträger löst und dann die in Axialrichtung wirkenden Kräfte in den ohnehin vorhandenen Absorber gelangen können. Dank der Erfindung wird ein vorhandenes und einen wirksamen Verformungsweg erlaubendes Bauteil für die Absorption der Aufprallenergie eines gegen das Lenkrad schlagenden Fahrers mit genutzt. Außerdem wird ein Einklemmen des Lenkungshalters zwischen dem Lagerunterteil und dem Einsatzteil aufgrund der Spannkraft der Befestigungsschraube auf einfache Weise vermieden, da das Lagerunterteil eine Auflagefläche für den Lenkungshalter und dazu höhenversetzt eine Auflage für das Einsatzteil hat, so daß zwischen dem Einsatzteil und der Auflagefläche ein Schlitz zur Aufnahme des Lenkungshalters verbleibt. Hierdurch vermag sich der Lenkungshalter besonders leicht zu verschieben, so daß die bei einem Crash wirkenden Kräfte voll für das Abscheren der Abscherkörper zur Verfügung stehen.

Eine konstruktiv besonders einfache und funktionell sehr wirksame Ausführungsform der Erfindung besteht darin, daß das Einsatzteil auf einem Lagerunterteil angeordnet ist, durch welches eine Befestigungsschraube durch eine zur Seite des Lenkrades hin offene Ausnehmung des Lenkungshalters in den Lenkungsträger führt, daß der Lenkungshalter zwischen dem Einsatzteil und dem Lagerunterteil gehalten ist, und daß der Abreißkörper oder die Abreißkörper vom Einsatzteil jeweils durch eine Bohrung des Lenkungshalters in eine Bohrung des Lagerunterteils führt bzw. führen.

Um zu verhindern, daß das Einsatzteil, welches vorteilhafterweise aus Kunststoff gefertigt wird, durch die Befestigungsschraube mit unerwünscht hoher Kraft gegen den Lenkungsträger gepreßt wird und sich dadurch verformt, kann man gemäß einer anderen Weiterbildung der Erfindung vorsehen, daß das Lagerunterteil einen eine Durchbrechung des Einsatzteils durchdringenden Bund hat, welcher seinerseits einen Durchlaß zum Durchführen der Befestigungsschraube aufweist.

Fertigungstoleranzen lassen sich dadurch ausgleichen, daß der Durchlaß als Langloch ausgebildet ist.

Das Einsatzteil kann dadurch auf dem Lagerunterteil gehalten werden, daß es zusätzlich zu seinem Abreißkörper oder den Abreißkörpern zumindest einen Haltezapfen zum Verbinden des Einsatzteiles mit dem Lagerunterteil hat.

Die Lenksäule klinkt nicht nur bei exakt auf sie in Axialrichtung einwirkenden Kräften, sondern auch bei schräg gerichteten Kräften zuverlässig vom Lenkungsträger aus, wenn das Einsatzteil mit bei definierter Kraft abbrechenden Abreißflächen auf dem Lenkungshalter aufliegt.

Die Kräfte, bei welchen die Abreißflächen abbrechen und dadurch die Lenksäule freigeben, sind besonders genau und mit geringem Kostenaufwand festzulegen, wenn gemäß einer anderen Weiterbildung der Erfindung die Abreißflächen jeweils über eine Sollbruchrille mit dem übrigen Bereich des Einsatzteils Verbindung haben.

Besonders zuverlässig und bei unterschiedlichen Kraftrichtungen wird ein Ausklinken der Lenksäule erreicht, wenn die Ausnehmung im Lenkungshalter zur Motorraumseite hin sich in der Breite verjüngt, wenn die Abreißflächen an der Motorraumseite über den Rand der Ausnehmung greifen und dort an jeder Seite jeweils ein Abreißkörper vorgesehen ist.

Vorteilhaft ist es auch, wenn zumindest ein Abreißkörper am freien Ende einen mit dem Rand der ihn aufnehmenden Bohrung des Lagerunterteils verrastenden Klips hat. Hierdurch ist eine Vormontage der Bauteile möglich, so daß sie bereits zusammengehalten sind, bevor der Befestigungsbolzen durch die Teile hindurch geführt und in den Lenkungsträger geschraubt wird.

Die Erfindung läßt zahlreiche Ausführungsformen zu. Eine davon ist in der Zeichnung dargestellt und wird nachfolgend beschrieben. Diese zeigt in
- Fig. 1: eine Seitenansicht einer erfindungsgemäßen Lenkanlage,
- Fig. 2: einen vertikalen Schnitt durch den Bereich eines Lenkungshalters,
- Fig. 3: eine Draufsicht auf die Lenkanlage mit einem Lenkungshalter und zwei Lenkungslagern,
- Fig. 4: einen Querschnitt durch die Lenkanlage,
- Fig. 5: eine Draufsicht auf den Bereich des Lenkungslagers,
- Fig. 6: eine Seitenansicht eines Lagerunterteils eines Lenkungslagers,
- Fig. 7: eine Draufsicht auf das Lagerunterteil,
- Fig. 8: eine Vorderansicht des Lagerunterteils,
- Fig. 9: einen Blick von unten auf ein Einsatzteil des Lenkungslagers,
- Fig. 10: eine Seitenansicht des Einsatzteils,
- Fig. 11: einen Blick auf das Einsatzteil von oben.

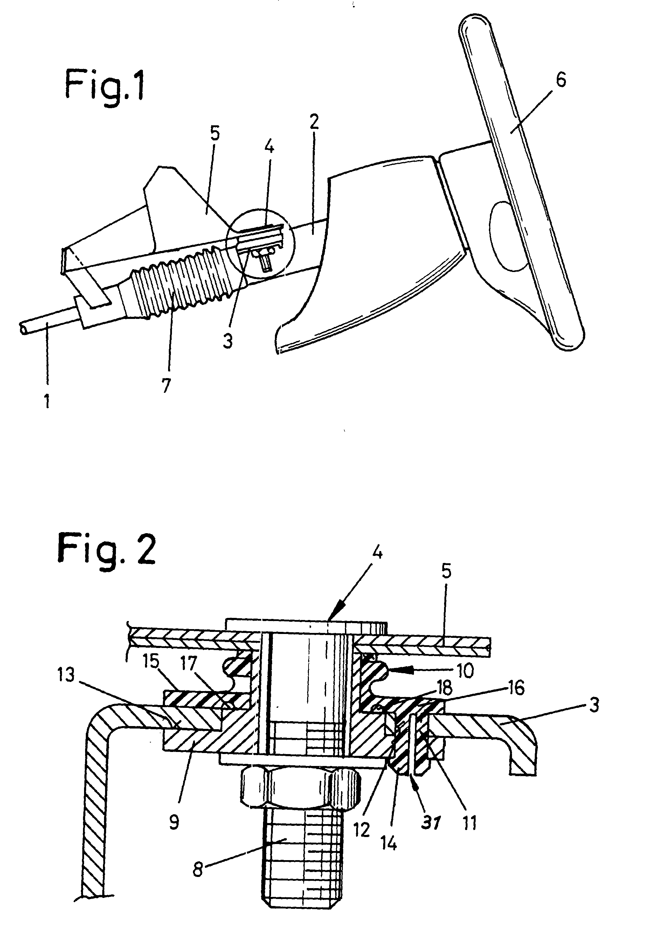

Die Figur 1 zeigt eine Lenksäule 1, welche drehbar in einem Lenkschutzrohr 2 angeordnet ist. Dieses Lenkschutzrohr 2 ist mittels eines Lenkungshalters 3 über zwei Lenkungslager 4 mit einem Lenkungsträger 5 verbunden, wobei für die Erfindung wichtig ist, daß diese Verbindung bei einer definierten Kraft ausklinkt. Auf dem fahrgastraumseitigen Ende der Lenksäule 1 ist ein übliches Lenkrad 6 angeordnet. Ebenfalls üblich ist ein Absorber 7, welcher bei heutigen Kraftfahrzeugen dazu dient, bei Krafteinwirkung von außen ein Zusammenstauchen der Lenkanlage zu ermöglichen, damit diese nicht in den Fahrgastraum eindringt.

Wichtig für die Erfindung ist die Gestaltung des Lenkungslagers 4, die nachfolgend zunächst anhand der Figur 2 erläutert wird. Dort sind Teilbereiche des Lenkungsträgers 5 und des Lenkungshalters 3 dargestellt. Eine Befestigungsschraube 8 verbindet diese Teile miteinander. Sie führt hierzu durch ein Lagerunterteil 9 und ein Einsatzteil 10 aus Kunststoff. Der Lenkungshalter 3 sitzt zwischen dem Lagerunterteil 9 und dem Einsatzteil 10 in einem Schlitz 13. Zu erkennen ist in Figur 2 ein als nach unten gerichteter Zapfen ausgebildeter Abreißkörper 11 am Einsatzteil 10, welcher durch eine Bohrung 12 des Lenkungshalters 3 führt und an seinem freien Ende als Klips 14 ausgebildet ist. Im Abreißkörper 11 ist zum Reduzieren bzw. exakten Bestimmen der Abscherkräfte eine Sackbohrung 31 vorgesehen.

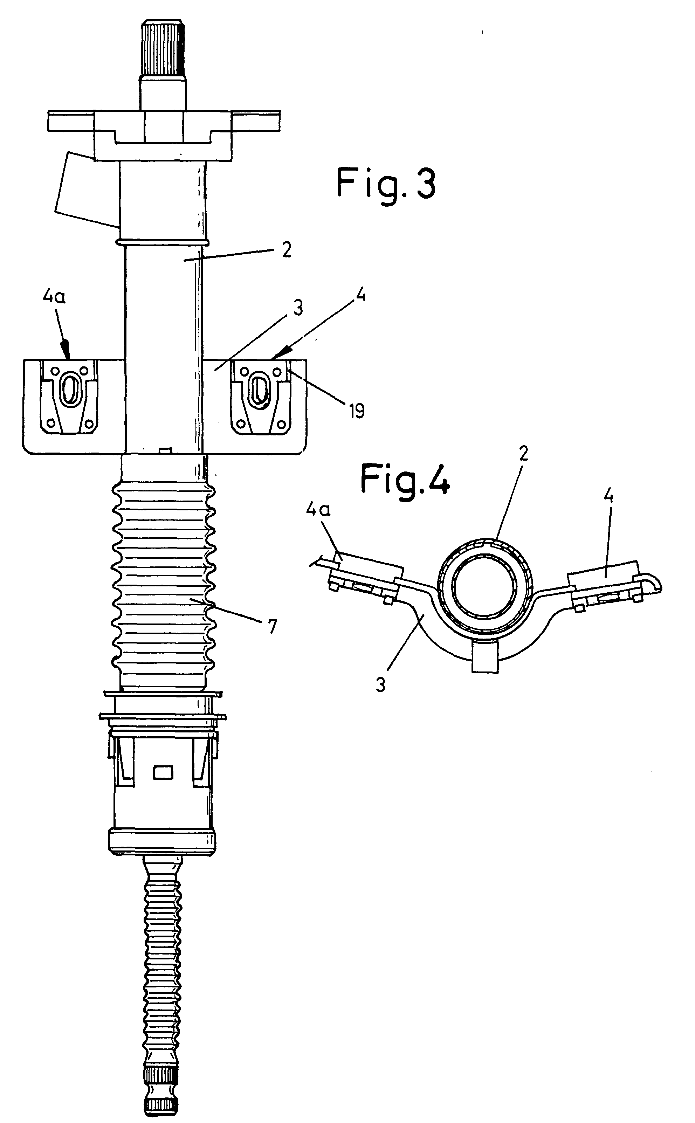

Ebenfalls zu erkennen ist in Figur 2, daß das Einsatzteil 10 mit Abreißflächen 15, 16 von oben her auf dem Lagerhalter 3 aufsitzt. Die Abreißflächen 15, 16 sind auf ihrer Unterseite jeweils über eine Sollbruchrille 17, 18 mit dem übrigen Bereich des Einsatzteils 10 in Verbindung. In Figur 3 ist zu sehen, daß der Lenkungshalter 3 sich zu beiden Seiten des Lenkschutzrohres 2 erstreckt und an jeder Seite ein Lenkungslager 4, 4a hat. Dieses sitzt jeweils in einer Ausnehmung 19 des Lenkungshalters 3, die zur Seite des in Figur 1 gezeigten Lenkrades 6, also in Figur 3 nach oben hin, offen ist.

Die Figur 4 verdeutlicht, daß der Lenkungshalter 3 ähnlich wie eine Rohrschelle die Unterseite des Lenkschutzrohres 2 teilweise umgreift. Ebenfalls sind in Figur 4 die beiden Lenkungslager 4, 4a zu erkennen.

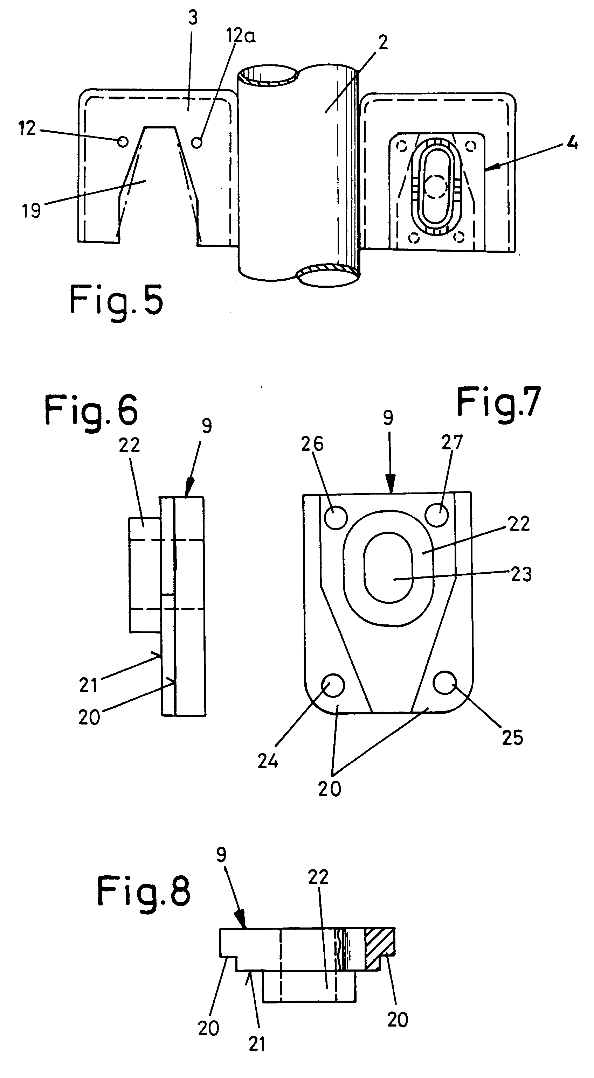

In der Figur 5 ist der Lenkungshalter 3 im linken Bildteil ohne und im rechten Bildteil mit dem Lenkungslager 4 dargestellt. Im linken Bildteil erkennt man deshalb, daß sich die Ausnehmung 19 zur Motorraumseite hin in ihrer Breite verjüngt und zum Fahrgastraum hin offen ist. Nahe ihres dem Lenkrad 6 abgewandten Endes erkennt man links von der Ausnehmung 19 die Bohrung 12 und rechts von ihr eine weitere Bohrung 12a. Durch diese Bohrungen 12, 12a führt nach dem Montieren des Lenkungslagers 4 jeweils ein in Figur 2 bereits gezeigter Abreißkörper 11.

Die genaue Gestaltung des Lagerunterteils 9 ergibt sich aus den Figuren 6 bis 8. Das Lagerunterteil 9 hat an seinen beiden Längsseiten eine Auflagefläche 20, auf welcher der Lenkungshalter 3 aufliegt. Höhenversetzt dazu verläuft eine Auflage 21, auf welcher nach Montage das Einsatzteil 10 sitzt. Weiterhin ist das Lagerunterteil 9 mit einem Bund 22 versehen, der das Einsatzteil 10 vollständig durchdringt und im montierten Zustand gegen den Lenkungsträger 5 anliegt. Durch diesen Bund 22 hindurch führt ein als Langloch ausgebildeter Durchlaß 23, durch den hindurch nach der Montage die Befestigungsschraube 8 verläuft. Die Auflagefläche 20 hat zwei Bohrungen 24, 25, in welche jeweils ein Abreißkörper 11 eingreift. Weiterhin sind in der Auflage 21 ebenfalls zwei Bohrungen 26, 27 vorgesehen.

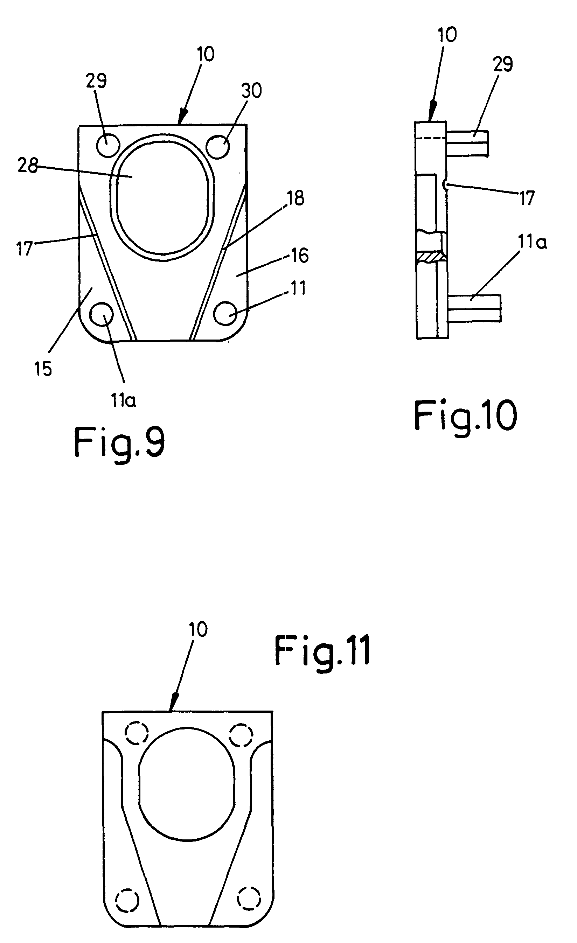

Die Figuren 9, 10 und 11 verdeutlichen die Gestaltung des Einsatzteiles 10. Die Figur 9 läßt insbesondere die Abreißflächen 15, 16 mit jeweils einer der Sollbruchrillen 17, 18 erkennen. Diese Abreißflächen 15, 16 sind jeweils mit einem der Abreißkörper 11, 11a versehen. Durch das Einsatzteil 10 hindurch führt eine Durchbrechung 28, welche dem Durchlaß 23 im Lagerunterteil 9 entspricht. Zusätzlich zu den Abreißkörpern 11, 11a hat das Einsatzteil 10 zwei Haltezapfen 29, 30, welche unmittelbar in die Bohrungen 26, 27 des Lagerunterteils 9 eingreifen, also nicht durch den Lenkungshalter 3 führen.

## Patentansprüche

1. Lenkanlage mit einer zu einem Lenkgetriebe führenden, ein Lenkrad (6) tragenden Lenksäule (1), welche in einem Lenkschutzrohr (2) drehbar und axial fixiert gelagert ist und bei der das Lenkschutzrohr (2) mittels eines fest mit ihm verbundenen Lenkungshalters (3) an einem Lenkungsträger (5) beim Auftreten durch einen Crash bedingter hoher Kräfte relativ zum Lenkungsträger (5) lösbar durch ein Einsatzteil gehalten ist, wobei das Einsatzteil (10) zumindest einen in den Lenkungshalter (3) eingreifenden Abreißkörper (11) hat, welcher zum Abreißen bei einer definierten durch den Fahrer auf das Lenkrad (6) ausgeübten Kraft und damit zum völligen Freigeben des Lenkungshalters (3) ausgebildet ist, **dadurch gekennzeichnet**, daß der Abreißkörper (11) formschlüssig in den Lenkungshalter (3) eingreift, und daß ein Lagerunterteil (9) eine Auflagefläche (20) für den Lenkungshalter (3) und dazu höhenversetzt eine Auflage (21) für das Einsatzteil (10) hat, so daß zwischen dem Einsatzteil (10) und der Auflagefläche (20) ein Schlitz (13) zur Aufnahme des Lenkungshalters (3) verbleibt.

2. Lenkanlage nach Anspruch 1, **dadurch gekennzeichnet**, daß das Einsatzteil (10) auf einem Lagerunterteil (9) angeordnet ist, durch welches eine Befestigungsschraube (8) durch eine zur Seite des Lenkrades (6) hin offene Ausnehmung (19) des Lenkungshalters (3) in den Lenkungsträger (5) führt, daß der Lenkungshalter (3) zwischen dem Einsatzteil (10) und dem Lagerunterteil (9) gehalten ist, und daß der Abreißkörper (11) oder die Abreißkörper (11) vom Einsatzteil (10) jeweils durch eine Bohrung (12) des Lenkungshalters (3) in eine Bohrung (24, 25) des Lagerunterteils (9) führt bzw. führen.

3. Lenkanlage nach zumindest einem der vorangehenden Ansprüche, **dadurch gekennzeichnet**, daß das Lagerunterteil (9) einen eine Durchbrechung (28) des Einsatzteils (10) durchdringenden Bund (22) hat, welcher seinerseits einen Durchlaß (23) zum Durchführen der Befestigungsschraube (8) aufweist.

4. Lenkanlage nach Anspruch 3, **dadurch gekennzeichnet**, daß der Durchlaß (23) als Langloch ausgebildet ist.

5. Lenkanlage nach zumindest einem der vorangehenden Ansprüche, **dadurch gekennzeichnet**, daß das Einsatzteil (10) zusätzlich zu seinem Abreißkörper (11) oder den Abreißkörpern (11) zumindest einen Haltezapfen (29, 30) zum Verbinden des Einsatzteiles (10) mit dem Lagerunterteil (9) hat.

6. Lenkanlage nach zumindest einem der vorangehenden Ansprüche, **dadurch gekennzeichnet**, daß das Einsatzteil (10) mit bei definierter Kraft abbrechenden Abreißflächen (15, 16) auf dem Lenkungshalter (3) aufliegt.

7. Lenkanlage nach Anspruch 6, **dadurch gekennzeichnet**, daß die Abreißflächen (15, 16) jeweils über eine Sollbruchrille (17, 18) mit dem übrigen Bereich des Einsatzteils (10) Verbindung haben.

8. Lenkanlage nach den Ansprüchen 6 oder 7, **dadurch gekennzeichnet**, daß die Ausnehmung (19) im Lenkungshalter (3) zur Motorraumseite hin sich in der Breite verjüngt, daß die Abreißflächen (15, 16) an der Motorraumseite über den Rand der Ausnehmung (19) greifen und dort an jeder Seite jeweils ein Abreißkörper (11) vorgesehen ist.

9. Lenkanlage nach zumindest einem der vorangehenden Ansprüche, **dadurch gekennzeichnet**, daß zumindest ein Abreißkörper (11) am freien Ende einen mit dem Rand der ihn aufnehmenden Bohrung (24, 25) des Lagerunterteils (9) verrastenden Klips (14) hat.

10. Lenkanlage nach zumindest einem der vorangehenden Ansprüche, **dadurch gekennzeichnet**, daß in zumindest einem Abreißkörper (11) eine abscherkräftereduzierende Innen- bzw. Sackbohrung vorgesehen ist.

## Claims

1. Steering system with a steering column (1) which leads to a steering gear and carries a steering wheel (6) and which is mounted rotatably and with axial fixing in a steering column jacket (2), and in which the steering column jacket (2) is held releasably, by means of a steering bracket (3) rigidly connected to it, by an insert portion on a steering carrier (5) when high forces relative to the steering carrier (5) caused by a crash occur, wherein the insert portion (10) has at least one break-off body (11) which engages in the steering bracket (3) and which is designed to break off at a given force applied by the driver to the steering wheel (6) and hence to completely release the steering bracket (3), **characterised in that** the break-off body (11) engages in the steering bracket (3) in form-locking relationship, and in that a lower bearing portion (9) has a support surface (20) for the steering bracket (3) and, vertically offset therefrom, a support (21) for the insert portion (10), so that between the insert portion (10) and the support surface (20) there remains a slot (13) for receiving the steering bracket (3).

2. Steering system according to claim 1, **characterised in that** the insert portion (10) is arranged on a lower bearing portion (9) through which a fastening bolt (8) passes through a recess (19) of the steering bracket (3) into the steering carrier (5), which recess (19) is open towards the side of the steering wheel (6), in that the steering bracket (3) is held between the insert portion (10) and the lower bearing portion (9), and in that the break-off body (11) or the break-off bodies (11) lead from the insert portion (10) in each case through a hole (12) in the steering bracket (3) into a hole (24, 25) in the lower bearing portion (9).

3. Steering system according to one or more of the preceding claims, **characterised in that** the lower bearing portion (9) has a collar (22) which passes through an aperture (28) of the insert portion (10) and which in turn has a passage (23) for feedthrough of the fastening bolt (8).

4. Steering system according to claim 3, **characterised in that** the passage (23) is designed as an oblong hole.

5. Steering system according to one or more of the preceding claims, **characterised in that** the insert portion (10) in addition to its break-off body (11) or the break-off bodies (11) has at least one holding pin (29, 30) for connection of the insert portion (10) to the lower bearing portion (9).

6. Steering system according to one or more of the preceding claims, **characterised in that** the insert portion (10) rests on the steering bracket (3) with break-off surfaces (15, 16) which break off at a given force.

7. Steering system according to claim 6, **characterised in that** the break-off surfaces (15, 16) are connected to the remainder of the insert portion (10) in each case by a predetermined break groove (17, 18).

8. Steering system according to claim 6 or 7, **characterised in that** the recess (19) in the steering bracket (3) tapers in width towards the engine compartment side, in that the break-off surfaces (15, 16) on the engine compartment side engage over the edge of the recess (19), and there on each side is provided a break-off body (11).

9. Steering system according to one or more of the preceding claims, **characterised in that** at least one break-off body (11) at the free end has a clip (14) latching with the edge of the hole (24, 25) in the lower bearing portion (9) which receives it.

10. Steering system according to one or more of the preceding claims, **characterised in that** in at least one break-off body (11) is provided a shear force-reducing internal or blind hole.

## Revendications

1. Système de direction comportant une colonne de direction (1) menant à un mécanisme de direction et supportant un volant (6), laquelle colonne de direction est montée dans un tube de protection (2) avec possibilité de rotation mais en étant immobilisée dans la direction axiale, système dans lequel le tube de protection (2) est fixé au moyen d'une console de direction (3) qui lui est reliée de manière fixe, sur un support de direction (5) de manière amovible par rapport à ce dernier par l'intermédiaire d'une pièce d'insert, en présence de forces importantes dues à une collision, la pièce d'insert (10) possédant au moins un corps de rupture (11) s'engageant dans la console de direction (3), lequel corps de rupture est conçu pour une rupture en présence d'une force définie exercée sur le volant (6) par le conducteur et donc pour libérer complètement la console de direction (3), **caractérisé en ce que** le corps de rupture (11) s'engage par complémentarité de formes dans la console de direction (3) et qu'une partie inférieure de palier (9) possède une surface d'appui (20) pour la console de direction (3) et, décalé en hauteur par rapport à ladite surface, un appui (21) pour la pièce d'insert (10) de sorte qu'une fente (13) destinée à recevoir la console de direction (3) subsiste entre la pièce d'insert (10) et la surface d'appui (20).

2. Système de direction selon la revendication 1, **caractérisé en ce que** la pièce d'insert (10) est disposée sur une partie inférieure de palier (9) à travers laquelle une vis de fixation (8) s'engage dans le support de direction (5) en traversant un évidement (19), ouvert vers le côté du volant (6), de la console de direction (3), que la console de direction (3) est tenue entre la pièce d'insert (10) et la partie inférieure de palier (9) et que le corps de rupture (11) ou les corps de rupture (11) de la pièce d'insert (10) traverse(nt) un perçage (12) de la console de direction (3) et pénètre(nt) dans un perçage (24, 25) de la partie inférieure de palier (9).

3. Système de direction selon au moins une des revendications précédentes, **caractérisé en ce que** la partie inférieure de palier (9) possède un collet (22) traversant un ajour (28) de la pièce d'insert (10), lequel collet présente quant à lui un passage (23) pour la vis de fixation (8).

4. Système de direction selon la revendication 3, **caractérisé en ce que** le passage (23) est réalisé sous forme de trou oblong.

5. Système de direction selon au moins une des revendications précédentes, **caractérisé en ce que** la pièce d'insert (10) possède, en plus de son corps de rupture (11) ou des corps de rupture (11), au moins un axe de retenue (29, 30) pour relier la pièce d'insert (10) à la partie inférieure de palier (9).

6. Système de direction selon au moins une des revendications précédentes, **caractérisé en ce que** la pièce d'insert (10) repose sur la console de direction (3) avec des surfaces de rupture (15, 16) qui se rompent en présence d'une force définie.

7. Système de direction selon la revendication 6, **caractérisé en ce que** les surfaces de rupture (15, 16) sont reliées par une rainure destinée à la rupture (17, 18) à la zone restante de la pièce d'insert (10).

8. Système de direction selon les revendications 6 ou 7, **caractérisé en ce que** l'évidemment (19) dans la console de direction (3) se rétrécit en largeur en direction du côté compartiment-moteur, que les surfaces de rupture (15, 16), sur le côté compartiment-moteur, passent sur le bord de l'évidemment (19) et qu'un corps de rupture (11) y est prévu sur chaque côté.

9. Système de direction selon au moins une des revendications précédentes, **caractérisé en ce qu**'au moins un corps de rupture (11) possède à l'extrémité libre un clip (14) qui s'enclenche avec le bord du perçage (24, 25) de la partie inférieure de palier (9) recevant ledit corps de rupture.

10. Système de direction selon au moins une des revendications précédentes, **caractérisé en ce qu'**un perçage intérieur ou un trou borgne réduisant les forces de cisaillement est prévu dans au moins un corps de rupture (11).
